# DEMANDE DE BREVET EUROPEEN

(11) **EP 0 819 875 A1**
(43) Date de publication de la demande: **21.01.1998**
(21) Numéro de dépôt: 97420123.8
(22) Date de dépôt: 17.07.1997
(51) Int. Cl.: F16K 1/20, F16K 11/052, F16K 31/10

(54) **Electrovanne pour distribution de liquide**

(30) Priorité: 18.07.1996 FR 9609266
(71) Demandeur: EATON S.A.M., MC-98000 Monaco (MC)
(72) Inventeur: Arnaud, Gérard, 06240 Beausoleil (FR)
(74) Mandataire: Bratel, Gérard

(57) **Abrégé**

L'électrovanne comprend un corps (1), pourvu d'une entrée de liquide (2) et d'au moins une sortie de liquide (3), à l'intérieur duquel est formé un passage (4) pour le liquide, et au moins un siège fixe (6). Un ensemble pivotant formant clapet (7), commandé à partir d'un électro-aimant, est composé d'une plaque-support (8) montée pivotante sur le corps (1) suivant un axe transversal (10) et d'au moins un volet (9) monté sur un côté de la plaque-support (8) par l'intermédiaire d'une rotule (11) et lié à cettte plaque-support (8) par des moyens de retenue (12) comportant un jeu. Le volet (9) peut ainsi s'orienter librement, pour s'appliquer de manière étanche sur le siège (7).

Applications : électrovanne à une ou deux sorties pour distribution d'eau, par exemple dans les lave-linge et les lave-vaisselle.

## Description

La présente invention concerne une électrovanne pour distribution de liquide, en particulier pour distribution d'eau. Cette électrovanne est destinée plus particulièrement, mais non exclusivement,à des appareils électro-ménagers tels que les lave-linge et les lave-vaisselle.

Ainsi l'invention s'intéresse aux électrovannes destinées à couper, avec une étanchéité totale ou relative,le passage de liquide, en l'occurrence de l'eau, dans un circuit donné.Cette eau est généralement polluée par les détergents, les graisses, ou autres produits utilisés dans les lave-linge et les lave-vaisselle. Dans un autre type d'application, il peut aussi s'agir du liquide utilisé dans un système de chauffage central, liquide qui peut lui aussi contenir des particules de corps étrangers.

Actuellement, les électrovannes utilisées dans ce genre d'applications sont des électrovannes à une entrée et une sortie, à volet pivotant. Le volet est commandé par un électro-aimant, et il vient obturer le passage du liquide de façon relative, la pression du liquide tendant à maintenir le volet dans sa position de fermeture. Malgré cela, en raison des différences d'alignement inévitables entre le volet pivotant et le siège fixe contre lequel ce volet doit s'appliquer, il existe des fuites de liquide importantes entre le volet et le siège, et l'étanchéité reste très imparfaite en position de fermeture.

Pour remédier à cet inconvénient, la seule solution actuellement connue consiste à insérer un joint élastique ou une autre pièce en élastomère équivalente, qui peut absorber les écarts d'alignement entre le volet et le siège, mais qui présente l'inconvénient de se déformer et de se dégrader, sous l'effet de l'eau chaude et des détergents contenus sans cette eau.

De plus, le système de commande des électrovannes actuelles, du genre ici considéré, est en contact direct avec le liquide traversant l'électrovanne, ce qui peut entraîner un blocage de ce système de commande, compte tenu des particules transportées par le liquide, et empêcher ainsi le fonctionnement de l'électrovanne.

La présente invention vise à éliminer tous ces inconvénients, en fournissant une électrovanne pourvue d'un système de volet capable d'absorber les différences d'alignement par rapport au siège , et d'assurer ainsi une meilleure étanchéité, sans pour cela insérer un joint ou une pièce en élastomère, l'électrovanne pouvant en outre comporter un système de commande isolé de liquide circulant dans cette éléctrovanne, ce qui améliore sa fiabilité.

A cet effet, l'invention a essentiellement pour objet une électrovanne pour distribution de liquide, comprenant un corps pourvu d'une entrée de liquide,et d'au moins une sortie de liquide, à l'intérieur duquel est formé un passage pour le liquide, et d' au moins une sortie de liquide, à l'intérieur duquel est formé un passage pour le liquide, et au moins un siège de vanne fixe, coopérant avec un volet pivotant commandé à partir d'un électro-aimant, cette électrovanne étant caractérisée en ce que le volet ou chaque volet appartient à un ensemble pivotant formant clapet, composé d'une plaque-support montée pivotante sur le corps de l'électrovanne, suivant un axe transversal au passage de liquide, et d'au moins un volet monté sur un côté de la plaque-support par l'intermédiaire de moyens à rotule, et lié à cette plaque-support par des moyens de retenue comportant un jeu, de manière à permettre la libre orientation du volet en vue de son application étanche sur le siège correspondant.

Le montage sur rotule du ou de chaque volet lui permet, lorsqu'il arrive en appui sur le siège, de se placer dans une position parfaitement parallèle au siège, en absorbant d'éventuels écarts d'alignement.

Dans le cas d'une électrovanne à une entrée et une seule sortie, l'ensemble pivotant formant clapet se compose de la plaque-support montée pivotante sur le corps de l'électrovanne, et d'un volet unique, monté sur un côté de cette plaque-support par l'intermédiaire de moyens à rotule.

Dans le cas d'une électrovanne à une entrée et deux sorties, qui constitue un distributeur permettant de diriger sélectivement le liquide vers l'une ou l'autre des deux sorties, l'ensemble pivotant formant clapet se compose de la plaque-support montée pivotante sur le corps de l'électrovanne, et de deux volets, montés de part et d'autre de la plaque support par l'intermédiaire de moyens à rotule respectifs, soit un premier volet monté sur un côté de la plaque-support et coopérant avec un premier siège associé à la première sortie, et un second volet monté sur le côté de la plaque-support opposé au précédent, et coopérant avec un second siège associé à la seconde sortie.

Dans tous les cas, les moyens à rotule du volet ou de chaque volet peuvent être simplement constitués par un bossage à surface sphérique, formé au centre du volet et dépassant sur sa face tournée vers la plaque-support, le bossage pouvant ainsi venir en appui sur la face de la plaque-support située en regard. Quant aux moyens de retenue du volet ou de chaque volet, ceux-ci sont avantageusement constitués par des crochets portés par ce volet et engagés, avec jeu, dans des trous correspondants ménagés dans la plaque-support.

Le volet ou chaque volet est réalisable en matière plastique moulée, son bossage central et ses crochets de retenue venant ainsi directement de moulage. Dans le cas d'une électrovanne à une entrée et deux sorties, les deux volets, montés de part et d'autre de la plaque-support,peuvent être des pièces moulées identiques, montées l'une en sens inverse à l'autre.

Selon un autre aspect de l'invention, le système de commande de l'électrovanne comprend un électro-aimant placé sur le côté du corps de l'électrovanne, le noyau mobile de l'électro-aimant étant accouplé à un axe oscillant,de direction orthogonale à l'axe de l'électro-aimant, cet axe oscillant étant solidaire de la plaque-support appartenant à l'ensemble pivotant formant clapet. La liaison entre le noyau mobile de l'électro-aimant et l'axe oscillant est notamment réalisable par une tige prolongeant le noyau mobile de l'électro-aimant et pourvue d'une tête terminale, coopérant avec une fourchette portée par ledit axe oscillant. Le système de commande est ainsi correctement isolé de la partie de l'électrovanne parcourue par le liquide.

De toute façon, l'invention sera mieux comprise à l'aide de la description qui suit, en référence au dessin schématique annexé représentant, à titre d'exemples, quelques formes d'exécution de cette électrovanne pour distribution de liquide :
Figure 1 est une vue en coupe longitudinale d'une première forme d'exécution de l'électrovanne pour distribution de liquide selon l'invention, à une entrée et une sortie, en position d'ouverture;
Figure 2 est une vue en coupe similaire à figure 1, mais montrant l'électrovanne en position de fermeture;
Figure 3 est une vue en coupe longitudinale d'une deuxième forme d'exécution de l'électrovanne pour distribution de liquide selon l'invention, à une entrée et deux sorties, dans une première position;
Figure 4 est une vue en coupe similaire à figure 3,mais passant par un autre plan de coupe;
Figure 5 est une vue en coupe similaire à figure 3, montrant l'électrovanne dans une autre position;
Figure 6 est une vue perspective de l'électrovanne des figures 3 à 5, avec une indication du système de commande;
Figure 7 est une autre vue en perspective de cette électrovanne;
Figure 8 est une vue en coupe de la même électrovanne, passant par l'électro-aimant.

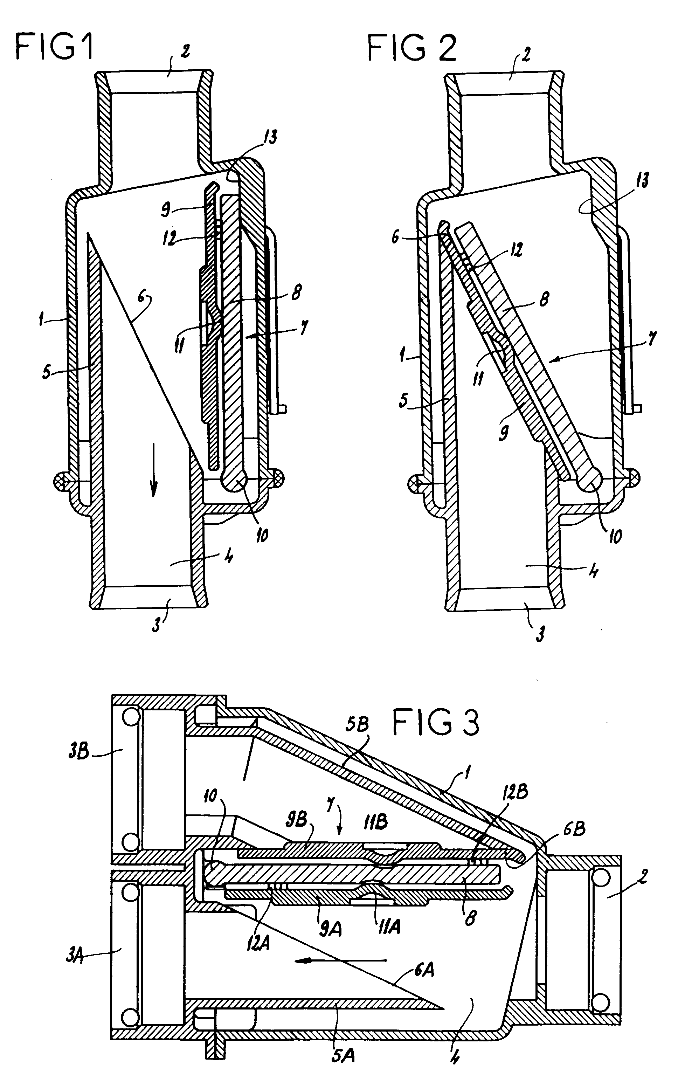

Les figures 1 et 2 montrent, en coupe longitudinale, le corps 1 d'une électrovanne à une entrée 2 et une sortie 3. A l'intérieur du corps 1 est formé un passage 4 pour le liquide, délimité notamment par un conduit tubulaire interne 5 s'interrompant suivant une face terminale oblique 6, formant un siège de vanne.

En regard du siège 6 est monté un ensemble pivotant 7, constituant clapet, qui est composé d'une plaque-support 8 et d'un volet 9. La plaque 8 est montée pivotante sur le corps 1, suivant un axe 10 disposé transversalement, sur le côté du passage 4. Le volet 9 possède en son centre un bossage à surface sphérique 11, dépassant sur sa face tournée vers la plaque 8 et appuyé sur cette plaque 8, de manière à former une articulation à rotule. Le volet 9 comporte encore, vers deux de ses angles diagonalement opposés, deux crochets 12 engagés dans des trous correspondants de la plaque 8, le système d'accrochage ainsi constitué possédant un jeu qui permet le libre pivotement du volet 9, en appui sur la plaque 8 par un bossage central 11.

La figure 1 montre l'électrovanne en position de repos ouverte, la plaque 8 étant en appui sur la paroi intérieure 13 du corps 1 et le passage 4 étant alors dégagé, de sorte que le liquide peut s'écouler librement depuis l'entrée 2 vers la sortie 3. En actionnant l'électro-aimant ( décrit ci-après) de l'électrovanne, la plaque 8 pivote autour de l'axe 10 et le volet 9, basculant avec la plaque 8, vient en appui sur le siège 6. Le passage 4 du liquide,entre l'entrée 2 et la sortie 3, est alors obturé comme le montre la figure 2.

Lorsque le volet 9 arrive en appui sur le siège 6, le montage sur rotule de ce volet 9 et son jeu par rapport à la plaque 8 permettent une libre orientation dudit volet 9, qui peut alors se placer de façon parfaitement parallèle au siège 6, et ainsi absorber les différences d'alignement et assurer une meilleure étanchéité, sans pour cela nécessiter un joint ou une pièce en élastomère.

Lorsque l'électro-aimant n'est plus actionné, le volet 9 se sépare du siège 6 et la plaque 8 revient en appui contre la paroi intérieure 13 du corps 1.

Les figures 3 et suivantes représentant une électrovanne reprenant le principe de la précédente, mais possédant une entrée 2 et deux sorties parallèles 3A et 3B, ainsi que deux conduits tubulaires internes 5A et 5B, qui se raccordent respectivement aux deux sorties 3A et 3B, et qui définissent deux sièges de vanne plans. respectivement 6A et 6B.

Entre les deux sièges 6A et 6B est monté un ensemble pivotant 7 formant clapet, composé d'une plaque-support 8 et de deux volets 9A et 9B. La plaque 8 est montée pivotante sur le corps 1 autour d'un axe transversal 10, situé entre les deux conduits tubulaires internes 5A et 5B. Le premier volet 9A est disposé sur le côté de la plaque 8 tourné vers le premier siège 6A. Le second volet 9B est disposé sur le côté de la plaque 8 opposé au précédent et tourné vers le second siège 6B. Chacun des deux volets 9A et 9B possède un bossage central, respectivement 11A, 11B, en appui sur la face correspondante de la plaque 8, et deux crochets opposés 12A ou 12B, réalisant ainsi un montage sur rotule pour chaque volet 9A ou 9B.

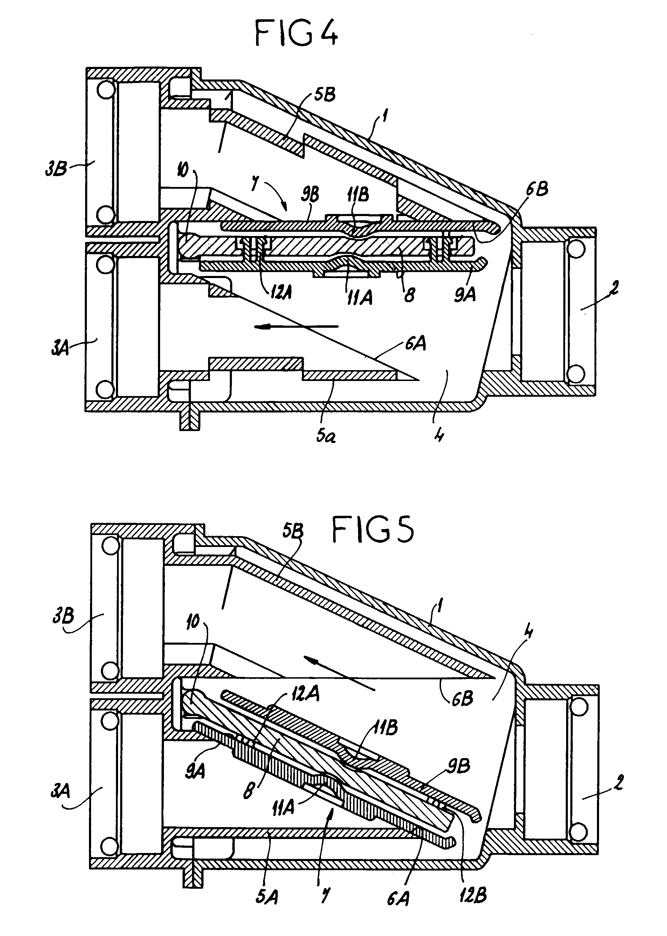

En position de repos (figures 3 et 4), l'ensemble pivotant ou clapet 7 est en appui, soit sur le siège 6A par le volet 9A, soit sur le siège 6B par le volet 9B comme représenté, selon le choix fait au montage. Lorsque le clapet 7 est ainsi en appui sur le second siège 6B, le liquide est dirigé de l'entrée 2 vers la première sortie 3A.

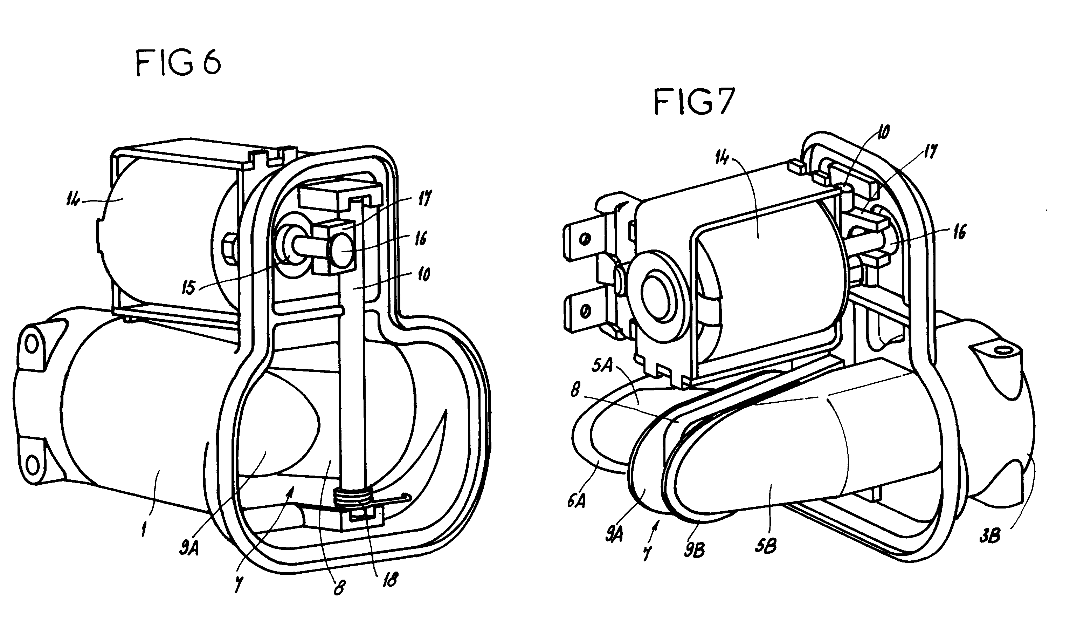

En actionnant l'électro-aimant, le clapet 7 bascule sur le premier siège 6A (voir figure 5), et le liquide est alors dirigé de l'entrée 2 vers la seconde sortie 3B. Lorsque l'électro-aimant n'est pas plus actionné,le clapet 7 revient dans sa position initiale, sur le second siège 6B.

Dans le cas de cette électrovanne à une entrée 2 et deux sorties 3A et 3B, le montage sur rotule des deux volets 9A et 9B permet, selon la position de l'électrovanne, à l'un ou l'autre des deux volets 9A et 9B de se positionner de façon parfaitement parallèle au siège correspondant 6A et 6B.

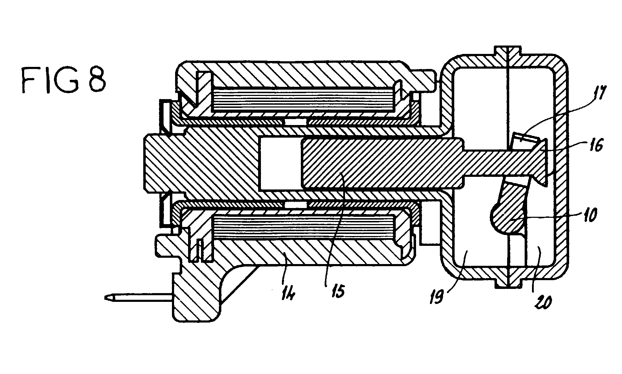

Les figures 6 à 8 montrent l'électrovanne complète, avec son système de commande à électro-aimant 14, placé sur le côté du corps 1, donc sans contact direct avec le liquide parcourant l'électrovanne. Le noyau mobile 15 de l'électro-aimant 14 se prolonge par une tige pourvue d'une tête terminale 16. Cette dernière coopère avec une fourchette 17 portée par l'extrémité d'un axe oscillant, qui n'est autre que l'axe de pivotement 10 de la plaque 8 de l'ensemble pivotant 7 formant clapet, précédemment décrit. Ainsi, la fourchette 17, l'axe 10 et la plaque 8 forment un ensemble rigide. Un ressort de rappel 18, qui est ici un ressort de torsion, agit sur l'axe de pivotement 10. On notera que le système de commande est isolé du liquide circulant dans l'électrovanne par un système d'étanchéité relative, qui est constitué de deux parties en forme de plaques 19 et 20 venant en jonction d'une contre l'autre lorsque l'électrovanne est assemblée - voir en particulier la figure 8. L'ensemble des deux plaques 19 et 20 est traversé par l'axe de pivotement 10.

Lorsque l'électro-aimant 14 est actionné, son noyau mobile 15 est attiré et il tire sur la fourchette 17, ce qui donne à l'axe 10 et à la plaque 8 un mouvement de rotation permettant au clapet 7 de passer de l'appui sur le siège 6B à l'appui sur le siège 6A, comme décrit précédemment.Le ressort de rappel 18 permet au clapet 7 de revenir à sa position initiale, lorsque l'électro-aimant 14 n'est plus actionné.

L'électrovanne précédemment décrite trouve notamment ses applications dans les lave-linge et les lave-vaisselle, mais elle est aussi utilisable dans d'autres domaines, par exemple dans les installations de chauffage central.

Comme il va de soi, l'invention ne se limite pas aux seules formes d'exécution, et aux seules applications de cette électrovanne pour distribution de liquide qui ont été indiquées ci-dessus, à titre d'exemples; elle en embrasse, au contraire, toutes les variantes de réalisation et d'utilisation respectant le même principe En particulier, l'on ne s'éloignerait pas de l'esprit de l'invention par des modifications constructives de détail, ou par utilisation de la même électrovanne avec un liquide autre que l'eau.

## Revendications

1. Electrovanne pour distribution de liquide, en particulier pour distribution d'eau, comprenant un corps (1) pourvu d'une entrée de liquide (2) et d'au moins une sortie de liquide (3; 3A, 3B), à l'intérieur duquel est formé un passage (4) pour le liquide, et au moins un siège de vanne fixe (6; 6A, 6B), coopérant avec un volet pivotant (9; 9A, 9B) commandé à partir d'un électro-aimant (14, 15), caractérisé en ce que le volet (9) ou chaque volet (9A, 9B) appartient à un ensemble pivotant formant clapet (7) composé d'une plaque-support (8) montée pivotante sur le corps (1) de l'électrovanne suivant un axe (10) transversal au passage (4) du liquide, et d'au moins un volet (9; 9A, 9B) monté sur un côté de la plaque-support (8) par l'intermédiaire de moyens à rotule (11; 11A, 11B), et lié à cette plaque-support (8) par des moyens de retenue (12; 12A, 12B) comportant un jeu, de manière à permettre la libre orientation de volet (9; 9A, 9B) en vue de son application étanche sur le siège correspondant (6; 6A, 6B).

2. Electrovanne pour distribution de liquide selon la revendication 1, caractérisée en ce qu'elle comporte une entrée (2) et une seule sortie (3), et en ce que l'ensemble pivotant formant clapet (7) se compose de la plaque-support (8) montée pivotante sur le corps (1) de l'électrovanne, et d'un volet unique (9), monté sur un côté de cette plaque-support (8) par l'intermédiaire de moyens à rotule (11).

3. Electrovanne pour distribution de liquide selon la revendication 1, caractérisée en ce qu'elle comporte une entrée (2) et deux sorties (3A, 3B), et en ce que l'ensemble pivotant formant clapet (7) se compose de la plaque-support (8) montée pivotante sur le corps (1) de l'électrovanne, et de deux volets (9A, 9B) montés de part et d'autre de la plaque-support (8) par l'intermédiaire de moyens à rotule respectifs (11A, 11B) soit un premier volet (9A) monté sur un premier côté de la plaque-support (8) et coopérant avec un premier siège (6A) associé à la première sortie (3A) et un second volet (9B) monté sur le côté de la plaque-support (8) opposé au précédent et coopérant avec un second siège (6B) associé à la seconde sortie (3B).

4. Electrovanne pour distribution de liquide selon l'une quelconque des revendications 1 à 3, caractérisée en ce que les moyens à rotule du volet (9) ou de chaque volet (9A ,9B) sont constitués par un bossage (11; 11A, 11B) à surface sphérique , formé au centre du volet (9; 9A, 9B) et dépassant sur sa face tournée vers la plaque-support (8).

5. Electrovanne pour distribution de liquide selon l'une quelconque des revendications 1 à 4, caractérisée en ce que les moyens de retenue du volet (9) ou de chaque volet (9A, 9B) sont constitués par des crochets(12; 12A, 12B) portés par ce volet 9; 9A, 9B) et engagés, avec jeu, dans des trous correspondants ménagés dans la plaque-support (8).

6. Electrovanne pour distribution de liquide selon l'ensemble des revendications 4 et 5, caractérisée en ce que le volet (9) ou chaque volet (9A, 9B) est réalisé en matière plastique moulée, son bossage central (11; 11A, 11B) et ses crochets de retenue (12; 12A, 12B) venant directement de moulage.

7. Electrovanne pour distribution de liquide selon l'ensemble des revendications 3 et 6, caractérisée en ce que les deux volets (9A, 9B), montés de part et d'autre de la plaque-support (8), sont des pièces moulées identiques, montées l'une en sens inverse de l'autre.

8. Electrovanne pour distribution de liquide selon l'une quelconque des revendications 1 à 7, caractérisée en ce que son système de commande comprend un électro-aimant (14) placé sur le côté du corps (1) de l'électrovanne, le noyau mobile (15) de l'électro-aimant (14) étant accouplé à un axe oscillant (10), de direction orthogonale à l'axe de l'électro-aimant (14), cet axe oscillant (10) étant solidaire de la plaque-support (8) appartenant à l'ensemble pivotant formant clapet (7).

9. Electrovanne pour distribution de liquide selon la revendication 8, caractérisée en ce que la liaison entre le noyau mobile (15) de l'électro-aimant (14) et l'axe oscillant (10) est réalisée par une tige prolongeant le noyau mobile (15) de l'électro-aimant (14) et pourvue d'une tête terminale (16), coopérant avec une fourchette (17) portée par ledit axe oscillant (10).

10. Electrovanne pour distribution de liquide selon la revendication 8 ou 9, caractérisée en ce que le système de commande est isolé du liquide circulant dans l'électrovanne par un système d'étanchéité relative, constitué de deux parties en forme de plaques (19, 20) venant en jonction l'une contre l'autre, et traversé par l'axe oscillant (10).
